# EUROPÄISCHE PATENTSCHRIFT

(11) **EP 1 031 055 B1**
(45) Veröffentlichungstag und Bekanntmachung des Hinweises auf die Patenterteilung: **25.01.2006**
(21) Anmeldenummer: 99955690.5
(22) Anmeldetag: 13.09.1999
(51) Int. Cl.: G02B 21/00, G01N 21/64

(54) **OPTISCHE ANORDNUNG IM STRAHLENGANG EINES KONFOKALEN FLUORESZENZMIKROSKOPS**
OPTICAL SYSTEM IN THE RAY PATH OF A CONFOCAL FLUORESCENCE MICROSCOPE
DISPOSITIF OPTIQUE PLACE DANS LE TRAJET DU RAYONNEMENT D'UN MICROSCOPE A FLUORESCENCE CONFOCAL

(30) Priorität: 15.09.1998 DE 19842153
(43) Veröffentlichungstag der Anmeldung: 30.08.2000
(73) Patentinhaber: Leica Microsystems Heidelberg GmbH, 68165 Mannheim (DE)
(72) Erfinder: ENGELHARDT, Johann, D-76669 Bad Schönborn (DE); ULRICH, Heinrich, D-69121 Heidelberg (DE); HAY, William, C., D-69646 Heppenheim (DE)
(74) Vertreter: Reichert, Werner Franz
(86) Internationale Anmeldenummer: PCT/DE1999/002910
(87) Internationale Veröffentlichungsnummer: WO 2000/016149

(56) Entgegenhaltungen:
- EP-A- 0 801 301
- US-A- 4 744 663
- US-A- 5 192 980
- US-A- 5 210 765
- PATENT ABSTRACTS OF JAPAN vol. 1998, no. 09, 31. Juli 1998 (1998-07-31) -& JP 10 096862 A (BUNSHI BIO PHOTONICS KENKYUSHO:KK), 14. April 1998 (1998-04-14) -& DATABASE WPI Week 199825 Derwent Publications Ltd., London, GB; AN 1998-281319 XP002131265
- PATENT ABSTRACTS OF JAPAN vol. 016, no. 085 (P-1319), 28. Februar 1992 (1992-02-28) -& JP 03 269405 A (FUJITSU LTD), 2. Dezember 1991 (1991-12-02)

## Beschreibung

Die Erfindung betrifft eine optische Anordnung im Strahlengang eines konfokalen Fluoreszenzmikroskops, mit mindestens einer Laserlichtquelle, einer im Beleuchtungs-/Detektionsstrahlengang angeordneten Einrichtung zur Trennung des am Objekt reflektierten Anregungslichts von dem vom Objekt abgestrahlten Fluoreszenzlicht, einem zwischen der Einrichtung und dem Objekt angeordneten Objektiv und einem der Einrichtung im Detektionsstrahlengang nachgeordneten Detektor.

Aus der Praxis ist es bereits seit Jahren bekannt, zur Trennung des am Objekt reflektierten Anregungslichts von dem vom Objekt abgestrahlten Fluoreszenzlicht dichroitische Strahlteiler zu verwenden. Bei der simultanen Mehrfarbanwendung finden entsprechend mehrfach dichroitische Strahlteiler Anwendung. Das vom reflektierten Anregungslicht befreite Fluoreszenzlicht wird - nach Trennung mittels Strahlteiler - mittels eines besonderen Detektors detektiert. Die in der Praxis verwendeten Strahlteiler sind im allgemeinen teuer. Darüber hinaus eignen sich diese Strahlteiler für quantitative Vergleichsmessungen hoher Präzision und hoher Meßdynamik nur wenig, zumal diese Strahlteiler u.a. auch temperaturabhängig sind. Darüberhinaus weisen dichroitische Strahlteiler Transmissionsverluste von etwa 10% für die Detektion auf.

Würde man bspw. einen wellenlängenunabhängigen Strahlteiler einsetzen, würde dies die Kosten zweifelsohne herabsetzen. Nachteilig wäre hierbei jedoch, daß man dabei das Streulicht des Anregungslichts vor der Detektion herausfiltern muß, bspw. durch Einsatz eines Sperrfilters. Dies ist wiederum in baulicher Hinsicht aufwendig und verursacht abermals Kosten. Außerdem wird dadurch die Fluoreszenzausbeute verringert. Simultane Mehrfarbanwendungen sind dann jedoch nicht möglich.

Bei Verwendung eines einfachen Strahlteilers gelangt zudem ein Streulichtreflex des Anregungslichts zurück in die Laserlichtquelle und stört die dort stattfindende stimulierte Emission, was sich wiederum durch unerwünschte Intensitätsschwankungen des Laserlichts bemerkbar macht.

Für höchstauflösende Anwendungen nutzt man zur Beleuchtung bzw. zum Scannen die gesamte numerische Apertur. Dies führt zu einem Beleuchtungsfokus, der in lateraler Richtung sehr klein ist, so daß längere Aufnahmezeiten erforderlich sind. Für Anwendungen, bei denen die Auflösung eine untergeordnete Rolle spielt, ist diese Vorgehensweise aufgrund der längeren Aufnahmezeiten nachteilig.

Hinsichtlich der konfokalen Fluoreszenzmikroskopie wird lediglich beispielhaft verwiesen auf Engelhardt und Knebel in "Physik in unserer Zeit", 24. Jahrg., 1993, Nr. 2 "Konfokale Laserscanning-Mikroskopie" und D.K. Hamilton und T. Wilson in Appl. Phys. B 27, 1982, 211-213 "Three-Dimensional Surface Measurement Using the Confocal Scanning Microscope".

Der vorliegenden Erfindung liegt nun die Aufgabe zugrunde, eine optische Anordnung im Strahlengang eines konfokalen Fluoreszenzmikroskops derart auszugestalten und weiterzubilden, daß gegenüber der gattungsbildenden Anordnung mit herkömmlichem dichroitischem Strahlteiler eine Erhöhung der Fluoreszenzausbeute bei einfacher Bauweise realisierbar ist.

Die erfindungsgemäße optische Anordnung im Strahlengang eines konfokalen Fluoreszenzmikroskops löst die voranstehende Aufgabe durch die Merkmale des Patentanspruches 1. Danach ist die eingangs genannte optische Anordnung dadurch gekennzeichnet, daß die Einrichtung einen Spiegel umfaßt und daß der Spiegel im Beleuchtungs-/Detektionsstrahlengang derart angeordnet und dimensioniert ist, daß er zur Dunkelfeldbeleuchtung des Objekts den von der Laserlichtquelle kommenden, nicht aufgeweiteten Anregungsstrahl in das Objektiv reflektiert und das vom Objekt kommende Fluoreszenzlicht mit voller numerischer Apertur - vermindert um den im Detektionsstrahlengang wirksamen Querschnitt des Spiegels - in Richtung des Detektors passieren läßt.

In erfindungsgemäßer Weise ist zunächst erkannt worden, daß die Einrichtung einen Spiegel umfaßt und daß der Spiegel im Beleuchtungs-/Detektionsstrahlengang derart angeordnet und dimensioniert ist, daß er zur Dunkelfeldbeleuchtung des Objekts den von der Laserlichtquelle kommenden, nicht aufgeweiteten Anregungsstrahl in das Objektiv reflektiert und das vom Objekt kommende Fluoreszenzlicht mit voller numerischer Apertur - vermindert um den im Detektionsstrahlengang wirksamen Querschnitt des Spiegels - in Richtung des Detektors passieren läßt.

Erfindungsgemäß ist weiter erkannt worden, daß es sich bei der Einrichtung zum Trennen des am Objekt reflektierten Anregungslichts von dem vom Objekt abgestrahlten Fluoreszenzlicht - anstelle eines herkömmlichen dichroitischen Strahlteilers - um einen Spiegel handeln kann, der im Beleuchtungs-/Detektionsstrahlengang angeordnet ist. Dieser Spiegel ist dabei derart - hinreichend klein - zu dimensionieren, daß er zur Dunkelfeldbeleuchtung des Objekts den von der Laserlichtquelle kommenden, nicht aufgeweiteten Anregungsstrahl in das Objektiv reflektiert und das vom Objekt kommende Fluoreszenzlicht mit voller numerischer Apertur in Richtung des Detektors passieren läßt, wobei das Fluoreszenzlicht um den im Detektionsstrahlengang wirksamen Querschnitt des Spiegels vermindert ist. Der vom Objekt reflektierte Hauptreflex des Anregungslichts wird in vorteilhafter Weise an dem Spiegel aus dem Detektionsstrahlengang herausreflektiert.

Aufgrund der hinreichend kleinen Ausgestaltung des Spiegels bzw. der spiegelnden Fläche wird lediglich der nicht aufgeweitete Anregungsstrahl in das Objektiv reflektiert. Durch die Beleuchtung mit einer derart "kleinen" numerischen Apertur (bspw. 10% der sonst üblichen Apertur) erzielt man eine "Dunkelfeldbeleuchtung", die entlang der optischen Achse einen elongierten Fokusbereich mit einem wohl definierten Fokusdurchmesser lateral aufweist. Erfindungsgemäß wird eine hinreichende Beleuchtungstoleranz in der Objektlage entlang der optischen Achse erreicht, was sich auf spezielle Anwendungen in der konfokalen Fluoreszenzmikroskopie besonders günstig auswirkt. Des weiteren ist eine Beleuchtung mit einer hohen intraszenischen Dynamik gewährleistet. Der Vorteil einer solchen hohen intraszenischen Dynamik liegt darin, daß bspw. zwei unmittelbar benachbarte Objekte unterschiedlicher absoluter Fluoreszenzintensität, z.B. Objekt A mit 100% und Objekt B mit 0,05%, in der gleichen Konfokalebene ohne "Überleuchten" des helleren Objekts getrennt voneinander meßbar sind.

In besonders vorteilhafter Weise ist der Spiegel derart dimensioniert bzw. klein ausgestaltet, daß er für das zu detektierende Fluoreszenzlicht im Detektionsstrahlengang einen Verlust von etwa 1% hervorruft. Dies ermöglicht eine effiziente Detektion mit besonders hohem Dynamikbereich.

Der hier verwendete Spiegel könnte im Rahmen einer besonders einfachen Ausführungsform als unabhängiges Bauteil ausgeführt sein, wobei der Spiegel wiederum von einer Halterung getragen ist. Im Rahmen einer solchen Ausgestaltung entfällt der Einsatz eines herkömmlichen Strahlteilers vollkommen, da hier nämlich im Strahlengang an entsprechender Stelle lediglich der kleine Spiegel angeordnet ist. Im Rahmen einer weiteren Alternative könnte der Spiegel als vorzugsweise integraler verspiegelter Bereich eines - ansonsten herkömmlichen - Strahlteilers ausgeführt sein, wobei der Spiegel bzw. der verspiegelte Bereich zumindest weitgehend in der Mitte des Strahlteilers angeordnet bzw. ausgebildet ist. Dieser kleine - integrale - Spiegel könnte in etwa rund oder elliptisch bzw. oval ausgebildet sein. Letztendlich handelt es sich hier um einen verspiegelten Bereich in der Mitte eines Strahlteilers, der ebenso wie ein isolierter Spiegel den nicht aufgeweiteten Anregungsstrahl in das Objektiv reflektiert. Auch hier findet die Beleuchtung mit einer äußerst kleinen numerischen Apertur zur Begünstigung der Dynamik statt.

Der nicht spiegelnde Bereich des Strahlteilers könnte in Richtung des Detektors in etwa 10% Reflexion und 90% Transmission aufweisen. Dabei könnte es sich im Konkreten um eine Anti-Reflex(AR)-Beschichtung auf der dem Detektor zugewandten Seite des Strahlteilers handeln. Dieser Strahlteiler läßt das Fluoreszenzlicht gemäß dem üblichen - unendlichen - Strahlengang mit der vollen numerischen Apertur - reduziert um das auf den verspiegelten Bereich treffende Fluoreszenzlicht - in Richtung des Detektors passieren. Durch den verspiegelten Bereich entsteht für das zu detektierende Fluoreszenzlicht ein äußerst geringer Verlust, nämlich in Abhängigkeit von der Größe des Spiegels. Hier lassen sich Verluste von lediglich 1% realisieren, was zu der bereits zuvor erwähnten hohen Dynamik führt.

Des weiteren könnte der nicht spiegelnde Bereich des Strahlteilers derart ausgestaltet und ggf. beschichtet sein, daß die optischen Eigenschaften des nicht spiegelnden Bereichs des Strahlteilers zumindest weitgehend temperaturunabhängig sind. Die Reproduzierbarkeit der Messung ist dadurch begünstigt.

Nun gelangt vom Objekt aus nicht nur Fluoreszenzlicht in den Detektionsstrahlengang, sondern auch Rückreflexe des Anregungslichts. Solche Rückreflexe sind unerwünscht. Zur Unterdrückung der Rückreflexe des Anregungslichts am Objekt zurück in die Laserlichtquelle könnte das Objekt schief angeordnet sein. Dies bedeutet, daß das Objekt selbst nicht orthogonal zur optischen Achse angeordnet ist, so daß sich für das rückreflektierte Anregungslicht ein separater Strahlengang ergibt, der zum Beleuchtungsstrahlengang zumindest geringfügig - räumlich - versetzt ist. In diesem besonderen Strahlengang lassen sich ohne weiteres herkömmliche Lichtfallen anordnen, um nämlich das rückreflektierte Anregungslicht wirksam auszublenden.

Im Falle einer erwünschten Objektverschiebung, bspw. zum Auffinden eines weiteren Objekts, ist es von besonderem Vorteil, wenn das Objekt in seiner Ebene derart bewegbar ist, daß der beleuchtete Objektbereich stets den gleichen Abstand zu dem Objektiv aufweist. Dadurch gelangt das am Objekt reflektierte und/oder gestreute Licht gemäß den voranstehenden Ausführungen nicht zurück in die Laserlichtquelle, sondern über den besonderen Strahlengang in eine Lichtfalle.

Alternativ zu der Vorkehrung einer Lichtfalle könnte der Spiegel - im Rahmen einer Ausgestaltung als isoliertes Bauteil - einen absorbierenden Bereich zur Absorption des vom Objekt gestreuten und/oder reflektierten Anregungslichts aufweisen. Die Vorkehrung besonderer Lichtfallen ist dabei nicht mehr erforderlich, wodurch sich eine räumliche Reduktion der Anordnung ergibt. So könnte der Spiegel - im Rahmen einer runden oder elliptischen bzw. ovalen Ausgestaltung - einen spiegelnden bzw. reflektierenden Bereich und einen absorbierenden Bereich aufweisen.

Ebenso ist es möglich, daß der Strahlteiler neben dem verspiegelten Bereich einen absorbierenden Bereich zur Absorption des vom Objekt gestreuten und/oder reflektierten Anregungslichts aufweist. Auch im Rahmen einer solchen Ausgestaltung kann die Vorkehrung einer besonderen Lichtfalle entfallen, so daß auch diese Ausgestaltung den Vorteil in sich birgt, die Anordnung mit geringstem Raumbedarf bauen zu können.

Schließlich ist es von ganz besonderem Vorteil, wenn durch ein geeignetes Verhältnis von Strahldivergenz zur Wellenlänge der verwendeten Laserlichtquellen eine zumindest annährend gleiche - axiale - Fokuslage möglich ist. Dadurch ist zum einen die notwendige Beleuchtungstoleranz in der Objektlage entlang der optischen Achse gegeben und ist zum anderen eine Beleuchtung mit einer hohen intraszenischen Dynamik gewährleistet. Hierzu wird zur Vermeidung von Wiederholungen auf die voranstehenden Ausführungen verwiesen.

Es gibt nun verschiedene Möglichkeiten, die Lehre der vorliegenden Erfindung in vorteilhafter Weise auszugestalten und weiterzubilden. Dazu ist einerseits auf die dem Patentanspruch 1 nachgeordneten Ansprüche, andererseits auf die nachfolgende Erläuterung von Ausführungsbeispielen der Erfindung anhand der Zeichnung zu verweisen. In Verbindung mit der Erläuterung der bevorzugten Ausführungsbeispiele der Erfindung anhand der Zeichnung werden auch im allgemeinen bevorzugte Ausgestaltungen und Weiterbildungen der Lehre erläutert. In der Zeichnung zeigt
- Fig. 1: in einer schematischen Darstellung den grundsätzlichen Aufbau einer erfindungsgemäßen optischen Anordnung im Strahlengang eines konfokalen Fluoreszenzmikroskops,
- Fig. 2: in einer schematischen Darstellung einen Strahlteiler mit mittigem Spiegel,
- Fig. 3: in einer schematischen Darstellung einen anstelle des Strahlteilers verwendbaren Spiegel als separates Bauteil und
- Fig. 4: in einer schematischen Darstellung einen Spiegel mit integralem reflektierenden und absorbierenden Bereich.

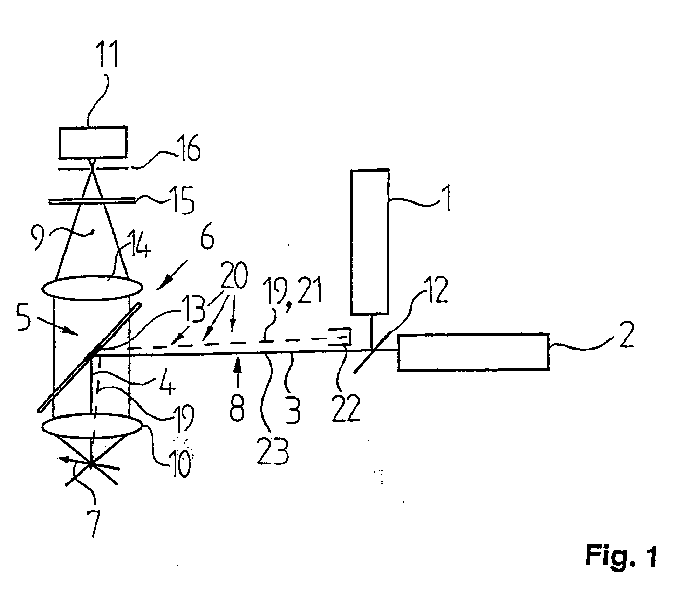

Fig. 1 zeigt in einer schematischen Darstellung ein Ausführungsbeispiel einer optischen Anordnung im Strahlengang eines konfokalen Fluoreszenzmikroskops, wobei diese Anordnung - bei dem hier gewählten Ausführungsbeispiel - zwei Laserlichtquellen 1, 2, eine im Beleuchtungs-/Detektionsstrahlengang 3, 4, 5 angeordnete Einrichtung 6 zur Trennung des am Objekt 7 reflektierten Anregungslichts 8 von dem vom Objekt 7 abgestrahlten Fluoreszenzlicht 9, ein zwischen der Einrichtung 6 und dem Objekt 7 angeordnetes Objektiv 10 und einen der Einrichtung 6 im Detektionsstrahlengang 5 nachgeordneten Detektor 11 umfaßt.

Fig. 1 läßt schematisch erkennen, daß das Anregungslicht 8 über einen Strahlvereiniger 12 zu der Einrichtung 6 gelangt, von dieser in das Objektiv 10 reflektiert wird und von dort aus zum Objekt 7 gelangt. Das Fluoreszenzlicht 9 gelangt wiederum durch das Objektiv 10 hindurch zu der Einrichtung 6, passiert diese mit Ausnahme des in erfindungsgemäßer Weise als Spiegel 13 ausgebildeten reflektierenden Bereichs und gelangt über eine Tubuslinse 14, ein Sperrfilterrad 15 und eine Detektionslochblende 16 zu dem Detektor 11.

Erfindungsgemäß umfaßt die Einrichtung 6 einen Spiegel 13, wobei der Spiegel 13 im Beleuchtungs-/Detektionsstrahlengang 3, 4, 5 derart angeordnet und dimensioniert ist, daß er zur Dunkelfeldbeleuchtung des Objekts 7 den von den Laserlichtquellen 1, 2 kommenden, nicht aufgeweiteten Anregungsstrahl bzw. das Anregungslicht 8 in das Objektiv 10 reflektiert und das vom Objekt 7 kommende Fluoreszenzlicht 9 mit voller numerischer Apertur - vermindert um den im Detektionsstrahlengang 4, 5 wirksamen Querschnitt des Spiegels 13 in Richtung des Detektors 11 passieren läßt.

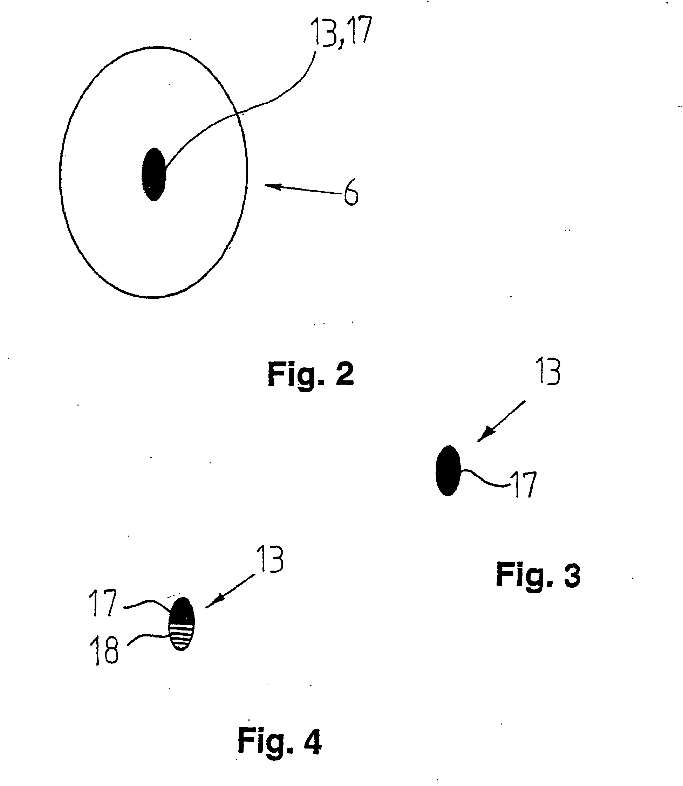

Bei dem in den Fig. 1 und 2 gezeigten Ausführungsbeispiel ist die Einrichtung 6 als Strahlteiler ausgeführt, wobei dort mittig der Spiegel 13 integriert ist.

Fig. 3 zeigt eine alternative Ausgestaltung der Einrichtung 6 dahingehend, daß diese schlicht und einfach als singulärer Spiegel 13 ausgeführt ist, wobei es sich bei dem Spiegel 13 um ein eigenständiges Bauteil handelt. Der Spiegel 13 könnte eine insgesamt verspiegelte Fläche gemäß der Darstellung in Fig. 3 aufweisen.

Bei dem in Fig. 4 dargestellten Ausführungsbeispiel ist der Spiegel 13 ebenfalls als separates Bauteil ausgeführt, wobei die Fläche des Spiegels 13 in eine reflektierende Spiegelfläche 17 und in eine absorbierende Fläche 18 unterteilt ist. Durch diese Maßnahme erübrigt sich die Vorkehrung einer separaten Lichtfalle für etwa rückreflektiertes Anregungslicht 19.

Sofern als Einrichtung 6 ein Strahlteiler beispielsweise gemäß der Darstellung in den Fig. 1 und 2, aber auch eine Ausführungsform nach den Fig. 3 und 4 verwendet wird, lassen sich die Rückreflexe bzw. läßt sich das rückreflektierte Anregungslicht 19 dadurch "unschädlich" machen, daß die Probe bzw. das Objekt 7 schief gestellt, d.h. nicht orthogonal zur optischen Achse 23 angeordnet ist. Dadurch wird das rückreflektierte Anregungslicht 19 geringfügig zum Beleuchtungsstrahlengang 20 bzw. zum Strahlengang des Anregungslichts 8 versetzt, so daß das rückreflektierte Anregungslicht 19 entlang eines eigenen Strahlengangs 21 rückreflektiert wird. Dort ist an geeigneter Stelle eine Lichtfalle 22 angeordnet, die aufgrund der Ausrichtung des Strahlengangs 21 abseits des Beleuchtungsstrahlengangs 20 bzw. des Anregungslichts 8 liegt.

Hinsichtlich weiterer vorteilhafter Ausgestaltungen der vorliegenden Erfindung wird zur Vermeidung von Wiederholungen auf die Ausführungen im allgemeinen Teil der Beschreibung verwiesen.

### Bezugszeichenliste

- 1: Laserlichtquelle
- 2: Laserlichtquelle
- 3: Beleuchtungsstrahlengang
- 4: Beleuchtungs-/Detektionsstrahlengang
- 5: Detektionsstrahlengang
- 6: Einrichtung zur Trennung des am Objekt reflektierten Anregungslichts von dem vom Objekt abgestrahlten Fluoreszenzlicht
- 7: Objekt
- 8: Anregungslicht
- 9: Fluoreszenzlicht
- 10: Objektiv
- 11: Detektor
- 12: Strahlvereiniger
- 13: Spiegel
- 14: Tubuslinse
- 15: Sperrfilterrad
- 16: Detektionslochblende
- 17: Spiegelfläche
- 18: absorbierende Fläche
- 19: rückreflektiertes Anregungslicht
- 20: Beleuchtungsstrahlengang
- 21: Strahlengang des rückreflektierten Anregungslichts
- 22: Lichtfalle
- 23: optische Achse

## Patentansprüche

1. Konfokales Fluoreszenz-Rastermikroskop mit einer optischen Anordnung im Strahlengang des konfokalen Fluoreszenzmikroskops, mit mindestens einer Lichtquelle (1, 2), einer im Beleuchtungs-/Detektionsstrahlengang (3, 4, 5) angeordneten Einrichtung (6) zur Trennung des am Objekt (7) reflektierten Anregungslichts (8) von dem vom Objekt (7) abgestrahlten Fluoreszenzlicht (9), einem zwischen der Einrichtung (6) und dem Objekt (7) angeordneten Objektiv (10) und einem der Einrichtung (6) im Detektionsstrahlengang (5) nachgeordneten Detektor (11), wobei die Einrichtung (6) einen Spiegel (13) umfasst, der das Licht der Lichtquelle zum Objektiv (10) hin umlenkt und dabei vom Fluoreszenzlicht (9) einen Anteil abschattet und somit das vom Objekt (7) kommende Fluoreszenzlicht (9) mit voller numerischer Apertur - vermindert um den im Detektionsstrahlengang (5) wirksamen Querschnitt des Spiegels (13) - in Richtung des Detektors (11) passieren lässt, wobei die mindestens eine Lichtquelle (1, 2) eine Laserlichtquelle ist, das nicht aufgeweitete Anregungslicht der Laserlichtquelle gegenüber dem Querschnitt des aus dem Objektiv (10) austretenden Fluoreszenzlichts einen wesentlich geringeren Strahlquerschnitt besitzt, und der Spiegel (13) derart dimensioniert ist, dass er für das zu detektierende Fluoreszenzlicht (9) im Detektionsstrahlengang (5) einen Verlust von etwa einem Prozent hervorruft.

2. Konfokales Fluoreszenz-Rastermikroskop nach Anspruch 1, **dadurch gekennzeichnet, dass** der Spiegel (13) als unabhängiges Bauteil ausgeführt ist.

3. Konfokales Fluoreszenz-Rastermikroskop nach Anspruch 2, **dadurch gekennzeichnet, dass** der Spiegel (13) von einer Halterung getragen ist.

4. Konfokales Fluoreszenz-Rastermikroskop nach Anspruch 1, **dadurch gekennzeichnet, dass** der Spiegel (13) als vorzugsweise integraler verspiegelter Bereich eines Strahlteilers ausgeführt ist.

5. Konfokales Fluoreszenz-Rastermikroskop nach Anspruch 4, **dadurch gekennzeichnet, dass** der Spiegel (13) in der Mitte des Strahlteilers (6) angeordnet ist und rund oder elliptisch ausgebildet ist.

6. Konfokales Fluoreszenz-Rastermikroskop nach Anspruch 5, **dadurch gekennzeichnet, dass** der nicht spiegelnde Bereich des Strahlteilers (6) in Richtung des Detektors (11) in etwa 10% Reflexion und 90% Transmission aufweist.

7. Konfokales Fluoreszenz-Rastermikroskop nach einem der Ansprüche 1 bis 6, **dadurch gekennzeichnet, dass** zur Unterdrückung des Rückreflexes des Anregungslichts (8) am Objekt (7) zurück in die Laserlichtquelle (1, 2) das Objekt (7) schief, d. h. nicht orthogonal zur optischen Achse (23), angeordnet ist, und dass für das rückreflektierte Anregungslicht (19) in dessen zum Beleuchtungsstrahlengang (20) zumindest geringfügig versetzten Strahlengang (21) eine Lichtfalle (22) vorgesehen ist.

8. Konfokales Fluoreszenz-Rastermikroskop nach einem der Ansprüche 1 bis 7, **dadurch gekennzeichnet, dass** das Objekt (7) in seiner Ebene derart bewegbar ist, dass der beleuchtete Objektbereich stets den gleichen Abstand zu dem Objektiv (10) aufweist.

9. Konfokales Fluoreszenz-Rastermikroskop nach einem der Ansprüche 1 bis 8, **dadurch gekennzeichnet, dass** der Spiegel (13) einen absorbierenden Bereich (18) zur Absorption des vom Objekt (7) gestreuten Anregungslichts (8) ausweist, und dass auf dem Strahlteiler neben dem verspiegelten Bereich der absorbierende Bereich (18) zur Absorption des vom Objekt (7) gestreuten Anregungslichts (8) vorgesehen ist.

10. Konfokales Fluoreszenz-Rastermikroskop nach einem der Ansprüche 1 bis 9, **dadurch gekennzeichnet, dass** durch ein geeignetes Verhältnis von Strahldivergenz zur Wellenlange der verwendeten Laserlichtquellen (1, 2) eine zumindest annähernd gleiche Fokuslage realisierbar ist.

## Claims

1. Confocal fluorescence scanning microscope having an optical arrangement in the beam path of the confocal fluorescence microscope, having at least one laser light source (1, 2), a device (6) arranged in the illumination/detection beam path (3, 4, 5) to separate the exciting light (8) reflected at the object (7) from the fluorescent light (9) radiated by the object (7), an objective (10) arranged between the device (6) and the object (7), and a detector (11) arranged downstream of the device (6) in the detection beam path (5), the device (6) comprising a mirror (13), which deflects the light of the light source towards the objective (10) and at the same time shades a proportion of the fluorescent light (9) and thus permits the fluorescent light (9) coming from the object (7) to pass in the direction of the detector (11) with full numerical aperture, reduced by the effective cross section of the mirror (13) in the detection beam path (5), the at least one light source (1,2) being a laser light source, the non-widened exciting light of the laser light source having a substantially smaller beam cross section than the cross section of the fluorescent light emerging from the objective (10), and the mirror (13) being dimensioned in such a way that, for the fluorescent light (9) to be detected, it causes a loss in the detection beam path (5) of about one per cent.

2. Confocal fluorescence scanning microscope according to Claim 1, **characterized in that** the mirror (13) is designed as an independent component.

3. Confocal fluorescence scanning microscope according to Claim 2, **characterized in that** the mirror (13) is carried by a holder.

4. Confocal fluorescence scanning microscope according to Claim 1, **characterized in that** the mirror (13) is designed as a preferably integrally silvered area of a beam splitter.

5. Confocal fluorescence scanning microscope according to Claim 4, **characterized in that** the mirror (13) is arranged at the centre of the beam splitter (6) and is circular or elliptical.

6. Confocal fluorescence scanning microscope according to Claim 5, **characterized in that** the non-reflective area of the beam splitter (6) exhibits approximately 10% reflection and 90% transmission in the direction of the detector (11).

7. Confocal fluorescence scanning microscope according to one of Claims 1 to 6, **characterized in that** in order to suppress the back-reflection of the exciting light (8) at the object (7) back into the laser light source (1, 2), the object (7) is arranged crookedly, that is to say not orthogonal to the optical axis (23), and **in that** for the back-reflected exciting light (19), a light trap (22) is provided in its beam path (21), which is at least slightly offset with respect to the illumination beam path (20).

8. Confocal fluorescence scanning microscope according to one of Claims 1 to 7, **characterized in that** the object (7) can be moved in its plane in such a way that the illuminated object area is always at the same distance from the objective (10).

9. Confocal fluorescence scanning microscope according to one of Claims 1 to 8, **characterized in that** the mirror (13) has an absorbing area (18) to absorb the exciting light (8) scattered by the object (7), and **in that** in addition to the silvered area, the absorbing area (18) for absorbing the exciting light (8) scattered by the object (7) is provided on the beam splitter.

10. Confocal fluorescence scanning microscope according to one of Claims 1 to 9, **characterized in that** by means of a suitable ratio between beam divergence and wavelength of the laser light sources (1, 2) used, an at least approximately identical focal position can be implemented.

## Revendications

1. Microscope à balayage à fluorescence confocal avec un dispositif optique placé dans le trajet du rayonnement du microscope à fluorescence confocal, avec au moins une source de lumière (1, 2), un dispositif (6) disposé dans le trajet du rayonnement d'éclairage/détection (3, 4, 5) pour la séparation de la lumière d'excitation (8) réfléchie sur l'objet (7) de la lumière fluorescente (9) rayonnée par l'objet (7), un objectif (10) disposé entre le dispositif (6) et l'objet (7), et un détecteur (11) disposé après le dispositif (6) placé dans le trajet du rayonnement de détection (5), dans lequel le dispositif (6) comprend un miroir (13), qui dévie la lumière de la source de lumière vers l'objectif (10) et obscurcit en l'occurrence une partie de la lumière fluorescente (9) et laisse dès lors passer la lumière fluorescente (9) venant de l'objet (7) avec une ouverture numérique totale - diminuée de la section transversale du miroir (13) active dans le trajet du rayonnement de détection (5) - en direction du détecteur (11), dans lequel ladite au moins une source de lumière (1, 2) est une source de lumière laser, la lumière d'excitation non amplifiée de la source de lumière laser possède une section transversale du rayonnement nettement plus petite que la section transversale de la lumière fluorescente sortant de l'objectif (10), et le miroir (13) est dimensionné de.telle façon qu'il provoque une perte d'environ un pour cent pour la lumière fluorescente à détecter (9) dans le trajet du rayonnement de détection (5).

2. Microscope à balayage à fluorescence confocal selon la revendication 1, **caractérisé en ce que** le miroir (13) est réalisé comme un composant indépendant.

3. Microscope à balayage à fluorescence confocal selon la revendication 2, **caractérisé en ce que** le miroir (13) est porté par un support.

4. Microscope à balayage à fluorescence confocal selon la revendication 1, **caractérisé en ce que** le miroir (13) est réalisé comme une région réfléchissante, de préférence intégrée, d'un diviseur de rayonnement.

5. Microscope à balayage à fluorescence confocal selon la revendication 4, **caractérisé en ce que** le miroir (13) est disposé au milieu du diviseur de rayonnement (6) et est de forme ronde ou elliptique.

6. Microscope à balayage à fluorescence confocal selon la revendication 5, **caractérisé en ce que** la zone non réfléchissante du diviseur de rayonnement (6) présente en direction du détecteur (11) une réflexion d'environ 10% et une transmission d'environ 90%.

7. Microscope à balayage à fluorescence confocal selon l'une quelconque des revendications 1 à 6, **caractérisé en ce que**, pour supprimer la rétroréflexion de la lumière d'excitation (8) sur l'objet (7) vers la source de lumière laser (1, 2), l'objet (7) est disposé en oblique, c'est-à-dire non orthogonalement à l'axe optique (23), et **en ce qu'**il est prévu un piège à lumière (22) pour la lumière d'excitation (19) rétroréfléchie, dans son trajet du rayonnement (21) au moins légèrement décalé par rapport au trajet du rayonnement d'éclairage (20).

8. Microscope à balayage à fluorescence confocal selon l'une quelconque des revendications 1 à 7, **caractérisé en ce que** l'objet (7) est déplaçable dans son plan de telle façon que la zone éclairée de l'objet présente toujours la même distance par rapport à l'objectif (10).

9. Microscope à balayage à fluorescence confocal selon l'une quelconque des revendications 1 à 8, **caractérisé en ce que** le miroir (13) présente une zone absorbante (18) pour l'absorption de la lumière d'excitation (8) diffractée par l'objet (7), et **en ce que** la zone absorbante (18) pour l'absorption de la lumière d'excitation (8) diffractée par l'objet (7) est prévue sur le diviseur de rayonnement en plus de la zone réfléchissante.

10. Microscope à balayage à fluorescence confocal selon l'une quelconque des revendications 1 à 9, **caractérisé en ce que** l'on peut réaliser une position de foyer au moins à peu près identique par un rapport adéquat de la divergence du rayonnement à la longueur d'onde des sources de lumière laser utilisées (1, 2).
